# EUROPEAN PATENT SPECIFICATION

(11) **EP 4 495 530 B1**
(45) Date of publication and mention of the grant of the patent: **22.04.2026**
(21) Application number: 23382754.2
(22) Date of filing: 21.07.2023
(51) Int. Cl.: F28D 7/16, F28F 9/02

(54) **HEAT EXCHANGER**
WÄRMETAUSCHER
ECHANGEUR DE CHALEUR

(43) Date of publication of application: 22.01.2025
(73) Proprietor: Airbus Operations, S.L.U., 28906 Getafe, Madrid (ES)
(72) Inventor: CASADO MONTERO, Carlos, E-28906 Madrid (ES); CALDERÓN GÓMEZ, Pablo Manuel, E-28906 Madrid (ES); ENEBRAL TRIGO, Ignacio Santiago, E-28906 Madrid (ES); GÓMEZ FERNÁNDEZ, Agustín, E-28906 Madrid (ES); BERROCOSO REDONDO, Jorge, E-28906 Madrid (ES); SANTANA SANTANA, Domingo José, E-28911 Leganés, Madrid (ES); GONZÁLEZ GÓMEZ, Pedro Ángel, E-28911 Leganés, Madrid (ES); ACOSTA IBORRA, Antonio, E-28911 Leganés, Madrid (ES); LAPORTE AZCUE, Marta, E-28911 Leganés, Madrid (ES)
(74) Representative: ABG Intellectual Property Law, S.L.

(56) References cited:
- EP-A1- 1 544 564
- EP-A1- 2 746 561
- EP-A1- 3 270 085
- EP-A1- 4 198 433

## Description

### TECHNICAL FIELD OF THE INVENTION

The present invention relates to a heat exchanger for an aircraft. In particular, the present invention belongs to the field of heat exchangers configured for being mounted at the combustion gases outlet of a power unit of an aircraft. The present invention also refers to the power unit and the aircraft thereof.

### BACKGROUND OF THE INVENTION

Auxiliary power units, or APUs, are well known in the aeronautical technical field for being engines capable of supplying energy to functions of an aircraft that are not considered as propulsion functions. APUs are generally found in large aircraft and located at/or near to the tail cone part of these aircraft.

Typical APUs generally comprise a power section being the power-producing section of the APU, a load compressor section providing pneumatic power for the aircraft and a gearbox section responsible for transferring power from the main shaft of the engine to a generator for electrical power. APUs are also known for allowing an aircraft to be autonomous of the external electrical and pneumatic power sources on the ground and in-flight.

Common engines, known as part of Auxiliary Power Unit of the state of the art, generate exhaust gases due to combustion of the fuel supplied to said engines. These exhaust gases are outputting out of the APU at high temperature which should be profitable to be recycled. Some solutions in the art based on heat exchangers are known in the art for using said heat generated by the exhaust gases in order to provide said heat back to the APU circuit.

Heat exchangers are devices used for forcing the exchange of energy, mostly based on heat, between two sources which may be fluid sources, gas sources or fluid and gas sources. Common heat exchangers present designs made for establishing a thermodynamic communication between these two sources, normally flowing in countercurrent or crosswise, and generally separated in order to prevent mixing between the two sources.

However, known solutions in the art include heavy materials with respect to the overall weight of the aircraft, such as heat exchangers based on shell tube technology, which present tendencies to generate deposition while operating which decreases the efficiency of the known heat exchangers of the art. Also, some problems well known in this technical field is that any element added to an aircraft is submitted to its weight impact and volume occupation with respect to the whole aircraft.

There is a need in the art for a heat exchanger allowing to solve complex problems due its installation on a power unit of an aircraft in high temperature and high flow velocity environment such as the exhaust gas outputted off the Auxiliary Power Unit. Also, the invention provides higher overall heat exchange performances and reduced weight compared to previously known technology. EP 2 746 561 A1 for example discloses a heat exchanger with many features in common with claim 1.

### SUMMARY OF THE INVENTION

The present invention is defined in the claims.

The heat exchanger of the present invention provides a solution based on at least one plate having a first end and a second end according to the longitudinal direction X-X', the at least one plate comprising an inner hollow volume configured to house a second fluid for transferring heat from a first fluid located and flowing outside the at least one plate to the second fluid located inside the at least one plate in an operative mode of the heat exchanger.

The liner of the heat exchanger of the invention extends along a length L_{T} according to the longitudinal direction X-X' and is configured for defining an inner chamber confining the at least one plate, the first and second collectors and the first and second sub-collectors. The liner defines the circumference of the inner chamber, which provides a water and gastight closed volume allowing optimal heat transfer between the first and the second fluid eliminating any external interference.

The liner has a substantially cylindrical shape extending along the length L_{T} according to the longitudinal direction X-X'.

The first end of the at least one plate corresponds to a first end of the liner and the second end of the at least one plate corresponds to the second end of the liner.

The second fluid housed inside the inner hollow volume of the at least one plate, in operative mode, is introduced in said at least one plate through the at least one fluid inlet, then through the second collector and, finally, through the at least one second sub-collector, all located at the second end of the liner. The at least one fluid inlet, the second collector and the at least one second sub-collector are all in fluid communication with each other and with the at least one plate.

At the opposite end of the at least one plate, which is located at the first end of the liner, the second fluid is removed out of the inner hollow volume of the at least one plate, when in operative mode, through the at least one first sub-collector, the first collector and the at least one fluid outlet successively. The at least one first sub-collector, the first collector and the at least one fluid outlet are all in fluid communication with the at least one plate.

The second fluid housed inside the at least one plate flows along the opposite direction of the longitudinal direction X-X' and through channels defined by the inner chamber in between the discrete spot welds joining the respective portions of the at least two sheets. In operative mode, while the second fluid is flowing from the second end to the first end of the at least one plate, said at least one plate helps transferring the heat from the first fluid located outside the at least one plate along its surface area to the second fluid housed inside the at least one plate.

Also in operative mode, the first fluid flows outside the at least one plate and enters in contact with the surface area, the outer surface of the sheets defining the at least one plate, so that said contact enhances heat transferring from one fluid to the other. The first fluid flows along the longitudinal direction X-X' so that the first fluid and the second fluid are arranged to flow in opposite direction, also called counterflow.

In particular, the first fluid is introduced in the heat exchanger at a first temperature from the first end of the at least one plate and the first fluid exits from the heat exchanger at a second temperature, which is lower than the second temperature, from the second end of the at least one plate. Therefore, the introduction side of the first fluid corresponds with the second fluid outlet and the exit side of the first fluid corresponds with the second fluid inlet. Such a configuration provides a continuous temperature gradient of the first fluid housed inside the at least one plate in order to provide an efficient and gradual heat transfer from the first to the second fluid. Thanks to that specific disposition, the heat exchanger of the present invention provides a second fluid, which is able to recollect heat from the first fluid in an optimal manner.

Also, the specific configuration of the at least one plate provides high turbulence in between the at least two sheets of each plate of the at least one plate so that it confers high overall heat transfer performances to the heat exchanger of the present invention. Additionally, less pump capacity is required for inputting and outputting the fluid inside the at least one plate due to the low volume defined in between said at least two sheets. Overall, the at least one plate confers to the heat exchanger of the present invention a reduced system weight for heat transfer between two fluids to be implemented in an aircraft.

*In a particular embodiment, the liner comprises at least two portions and attaching means configured for fixing the portions of the liner together.*

In some embodiments, the attaching means are disposed on the outer surface of the liner and at each end of said liner. In some preferred embodiments, the attaching means are located over and under the liner at both the first and second ends of said liner, disposed symmetrically with respect to the longitudinal direction X-X', and may be bolts, springs, a combination of both, and, optionally, may also comprise seals.

Advantageously, the liner has at least two portions which helps for assembling/disassembling operations and maintenance due to easier access to the elements housed inside the liner of the heat exchanger.

In an embodiment, the liner has two substantially semi-cylindrical portions and attaching means configured for fixing both of the substantially semi-cylindrical portions of the liner to one another.

Also, when the liner has two substantially semi-cylindrical portion, the attaching means configured for fixing said portions together provides a solution for compensating thermal expansion of the at least one plate located inside the liner.

The first and the second collector are ring-shaped or open-ring shaped, preferably circular shaped in order to provide optimal fitting inside the liner of the heat exchanger of the invention and high flow performance for introducing and removing the second fluid housed inside the at least one plate in an homogeneous manner.

Advantageously, having collectors being ring-shaped ensures the constant length of the first and second sub-collectors respectively to the first and second collectors.

*In a particular embodiment, the first and second sub-collectors are curved.*

Advantageously, the diameter of the first and second sub-collectors can be adjusted in order to equalize pressure drop.

In an embodiment, the first and second sub-collectors are made of flexible materials which means that, when the heat exchanger is in operative mode, the sub-collectors have some degree of deformability/elasticity in order to adapt to the specific conditions of the heat exchanger of the invention and recover its original shape when the heat exchanger is not in operative mode. Advantageously, it helps reducing load transmission between the plates and the collectors and avoiding thermal buckling between plates.

*In a particular embodiment, the heat exchanger comprises a plurality of plates, preferably between 7 and 9 plates.*

In an embodiment, when the second fluid is Helium (He), the heat exchanger comprises 7 plates.

In an embodiment, when the second fluid is Nitrogen, the heat exchanger comprises 9 plates

*In a more particular embodiment, the plurality of plates are arranged essentially parallel to each other according to the longitudinal direction X-X' and essentially perpendicular with respect to a horizontal plane comprising the transversal direction Y-Y'.* In other words, the plurality of plates is arranged essentially in a vertical direction Z-Z' perpendicular with respect to a horizontal plane comprising the transversal direction Y-Y'.

As it is well known, a horizontal plane is a plane which is perpendicular to the direction of gravity.

Advantageously, by arranging the plurality of plates in an essentially parallel direction, the distance in between plates is maintained along the whole longitudinal direction X-X' enhancing the performance of the heat transfer between the first and the second fluid. Advantageously, arranging the plurality of plates essentially perpendicular with respect to the horizontal plane comprising the transversal direction Y-Y' minimizes vibrations loads received by the plurality of plates and, also, prevents said plurality of plates from bending when receiving loads from landing.

*In a particular embodiment, the plurality of plates are arranged according to a stepped pattern and the area of the plurality of plates decreases along a transversal direction Y-*Y'.

The plurality of plates are arranged according to a stepped pattern along the transversal direction Y-Y' in order to fit the plurality of plates inside the volume defined by the inner chamber of the liner. In some further embodiment, as much volume as available of the inner chamber of the liner is filled with plates so that the heat transfer between the first and the second fluid is enhanced.

*In a particular embodiment, the second fluid is Nitrogen, Helium, EGW (Ethylene Glycol Water), oil or water.*

In an embodiment, the first fluid is exhaust gases outputted from an engine, more particular, from an engine supplied with hydrogen (H₂).

*In a particular embodiment, the at least one fluid outlet of the first collector and the at least one fluid inlet of the second collector are elbow-shaped.*

Advantageously, the elbow-shape of the at least one fluid outlet of the first collector and the at least one fluid inlet of the second collector helps absorbing the thermal expansion of the plates and collectors.

*In a particular embodiment, the at least one fluid outlet of the first collector and the at least one fluid inlet of the second collector are oriented in the same vertical direction Z-Z' as the at least one plate.*

In this particular embodiment, the at least one fluid outlet and the at least one fluid inlet are located in the lower part of the first and second collectors respectively and with respect to the at least one plate orientation which is, preferably, perpendicular with respect to a horizontal plane comprising the longitudinal direction X-X'. Also, the at least one fluid outlet and the at least one fluid inlet are oriented in the same direction as the entry and the exit of the second fluid inside the at least one plate, that is along a vertical direction Z-Z'.

In a particular embodiment, the at least one fluid outlet and the at least one fluid inlet are aligned with the center of the liner along the vertical direction Z-Z'.

*In a particular embodiment, the first and second collectors respectively comprise two fluid outlets and two fluid inlets,*
*the two fluid outlets being in fluidic communication and connected to one another, and*
*the two fluid inlets being in fluidic communication and connected to one another, and the two fluid outlets and the two fluid inlets are respectively located on opposite sides of the first collector and of the second collector.*

Advantageously, the first and second collectors have respectively two fluid outlets and two fluid inlets in order to introduce the second fluid inside said first and second collector, and thus inside the at least one plate, in a homogeneous and optimal manner which enhance the overall performances of the heat exchanger of the invention. In these embodiments, the two fluid outlets and the two fluid inlets are located on opposite sides of the collectors. The two fluid outlets and the two fluid inlets enhance the flow distribution of the second fluid.

*In a particular embodiment, the attaching means are located on each side of the liner and symmetrically placed along the length of the liner with respect to the symmetrical axis, and longitudinal direction X-X', of the liner.*

*In a particular embodiment, the liner is gastight and*/*or fireproof.*

*In a second inventive aspect, the present invention provides a power unit for an aircraft comprising:*
*a power unit inlet configured to supply the first fluid to the power unit, an engine and* a *power unit outlet configured for exhausting the first fluid out of the engine,*
   *wherein*
*the power unit outlet comprises a heat exchanger according to any of embodiments of the first inventive aspect, and*
*the heat exchanger further comprises two connecting means, one located at each end of the at least one plate, wherein one of the connecting means is configured for mounting the heat exchanger on the power unit outlet.*

In the present application, the power unit outlet refers, more particularly, to the combustion gases outlet.

The heat exchanger of any of the embodiments, or combination thereof of the first inventive aspect, is adapted to be mounted downstream the power unit outlet of an aircraft so that the exhaust gases of said power unit, that is the exhaust gases of the engine implemented in the power unit, can be used as the first fluid flowing around the at least one plate and inside the volume of the inner chamber defined by the liner.

Advantageously, the heat exchanger further comprises connecting means located at each end of the at least one plate and liner so that one end of the heat exchanger is configured to be mounted downstream the power unit outlet and the other end of the heat exchanger is configured for coupling another device downstream such as a muffler.

Also, the heat exchanger of the invention is mounted at the power unit outlet in such a way that the connecting means located on the side of the first end of the at least one plate and liner are the one mounted directly to the power unit outlet. In this way, the first fluid outputted from the power unit outlet has a first temperature, which is higher at its entry inside the heat exchanger than its temperature when the first fluid reaches the other end of the second end at least one plate. Therefore, by mounting the heat exchanger in said direction, along the longitudinal direction X-X' and in said orientation, the present invention allows the first fluid and the second fluid to have countercurrent flow arrangement. Therefore, the present invention helps providing a gradual heat transfer from the first fluid to the second fluid, enhancing performances and capacities of the heat exchanger of the invention and, thus, of the power unit of the second inventive aspect.

*In a particular embodiment of the power unit according to the second inventive aspect and the heat exchanger according to any embodiment of the first inventive aspect having attaching means, the attaching means are either:*
*fixed along the longitudinal direction X-X' and a vertical direction Z-Z', or*
*fixed along the longitudinal direction X-X' and free along the vertical direction Z-Z', or*
*free along the longitudinal direction X-X' and fixed along the vertical direction Z-Z', or*
*free along the longitudinal direction X-X' and the vertical direction Z-Z'.*

In the present document, the term "free along" should be considered such that a limited degree of movement is allowed along a direction, or a plurality of directions, while such element is not completely free of movement but has room for providing a certain amount of movement along said direction(s) to the attaching means.

Also, the vertical direction Z-Z' is a perpendicular to a horizontal plane comprising both directions X-X' and Y-Y'*.*

Advantageously, thanks to the different configurations of the attaching means of the present embodiment of the power unit, the invention provides an optimal way of fixing the liner and allows some degrees of freedom in specific directions to said liner due to the thermal expansion of the at least one plate located inside the inner chamber of the liner.

In some embodiments, the heat exchanger has four attaching means, two located at each end of the liner. Also, at each end of the liner, the attaching means of each respective ends of the liner are preferably placed symmetrically with respect to the longitudinal direction X-X'.

In some preferred embodiments, the heat exchanger has four attaching means and each one of the attaching means has one of the configurations selected from the list of configurations:
fixed along the longitudinal direction X-X' and a vertical direction Z-Z', or
fixed along the longitudinal direction X-X' and free along the vertical direction Z-Z', or
free along the longitudinal direction X-X' and fixed along the vertical direction Z-Z', or
free along the longitudinal direction X-X' and the vertical direction Z-Z'.

*In a particular embodiment of the power unit according any embodiment of the second inventive aspect and any embodiment of the heat exchanger of the first inventive aspect having attaching means, wherein the attaching means* and/or the collectors and sub-collectors *are either:*
*sealed with respect to the power unit outlet, or*
*encapsulated and sealed with respect to the power unit outlet, or*
*encapsulated and further comprises blocking means configured for opening or closing the fluidic communication with the power unit outlet, or*
   *encapsulated and in fluid communication with the power unit outlet.*

Advantageously, the configuration where the attaching means, collectors and sub-collectors are encapsulated and in fluid communication with the power unit outlet, that is where the first fluid flows, provides an homogeneous temperature among the at least one plate, the first and second sub-collectors and the first and second collectors by allowing exhaust gases to enter the collector area. Thus, collectors and sub-collectors are relieved from thermal stress present during power unit operation.

In an embodiment, the blocking means have two substantially semi-circular sections.

In an embodiment, the blocking means comprise two portions and coupling means, such as rivets, which allow assembling and disassembling the two portions of the blocking means. The blocking means are preferably located along the liner and in between the sub-collectors so that it helps minimizing the aerodynamic flow leakage from the encapsulated volume inside the liner.

Preferably, the blocking means are made of Inconel, Corrosion Resistant Stainless Steel or any material resistant to both corrosion and high temperatures.

*In a third inventive aspect, the present invention provides an aircraft comprising a power unit according to any embodiment of the second inventive aspect.*

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1a-b: These figures show embodiments of the distribution of the at least one plate of the heat exchanger according to the present invention.
- Figure 2: This figure shows an embodiment of the heat exchanger according to the present invention.
- Figure 3a-e: These figures show embodiments of the collectors according to the invention.
- Figure 4: This figure shows a cross-section view of an embodiment of the attaching means of the heat exchanger according to the invention.
- Figure 5a-d: These figures show embodiments of the attaching means of the heat exchanger according to the invention.
- Figure 6a-d: This figure shows embodiments of the integration of the attaching means, the collectors and sub-collectors according to embodiments of the invention.
- Figure 7: This figure shows a power unit according to an embodiment of the second inventive aspect of the invention.
- Figure 8: This figure shows an aircraft according to an embodiment of the third inventive aspect of the invention.
- Figure 9: This figure shows schematic representations of conventional plates according to the prior art.

### DETAILED DESCRIPTION OF THE INVENTION

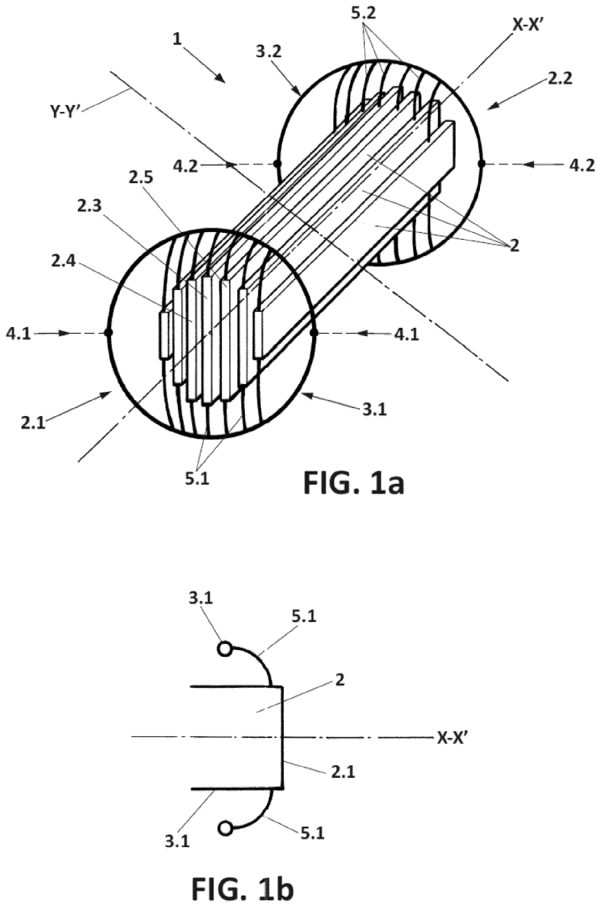

Figure 1a and Figure 1b show an embodiment of the distribution of the at least one plate (2) of the heat exchanger (1) of the present invention.

Figure 1a depicts an embodiment where the heat exchanger has seven plates (2), each plate having a first end (2.1) and a second end (2.2), distributed in parallel according to the longitudinal direction X-X'. Each plate (2) is separated from the other plates so that a first fluid is flowing in between said plates (2) when the heat exchanger (1) is in operative mode. Each of the plates (2) comprises an inner hollow volume configured to house a second fluid. The heat exchanger (1), thanks to the plates (2), allows transferring heat from the first fluid located outside the at least one plate (2) to the second fluid located inside the at least one plate (2).

Preferably, the first fluid is exhaust gases, preferably exhaust gases of an engine of a power unit, more preferably, an engine supplied with hydrogen.

Preferably, the second fluid is Nitrogen, Helium, EGW (Ethylene Glycol Water), oil or water.

The heat exchanger (1) has a first collector (3.1) located at the first end (2.1) of the plates (2) and a second collector (3.2) located at the second end (2.2) of the plates. In this particular embodiment, the first and second collectors (3.1, 3.2) are circular shaped.

The second collector (3.2) allows introducing the second fluid inside the plates (2) and the first collector (3.1) allows extracting the second fluid out of the plates (2). In the embodiment of figure 1a, the first collector (3.1) has two fluid outlets (4.1) located on opposite sides of the circular shaped first collector (3.1) and the second collector (3.2) has two fluid outlets (4.2) located on opposite sides of the circular shaped second collector (3.2).

The first collector (3.1) and the second collector (3.2) are configured to be in fluidic communication with the inner hollow volume of the plates (2), the fluid outlets (4.1) and the fluid inlets (4.2). By means of the fluid inlets (4.2), the second fluid is introduced inside the second collector (3.2), and thus inside the plates (2), at the second end (2.2) of said plates (2). By means of the fluid outlets (4.1), the second fluid is introduced inside the first collector (3.1), and thus inside the plates (2), at the first end (2.1) of said plates (2).

Further, the heat exchanger (1) has first sub-collectors (5.1) connecting one by one the first collector (3.1) to each one of the plates (2), in particular to each of their first end (2.1). At the opposite end of the plates (2), the heat exchanger (1) also has second sub-collectors (5.2) connecting one by one the second collector (3.2) to each one of the plates (2), in particular to each of their second end (2.2).

In this particular embodiment, as shown in figure 1b, the sub-collectors (5.1), and respectively the sub-collectors (5.2) at the other end of the plates (2), are curved. The curved sub-collectors (5.1, 5.2) are preferably made of flexible materials in order to absorb vertical displacements and thermal expansions. In some preferred embodiment, the sub-collectors are made of Stainless Steel 316.

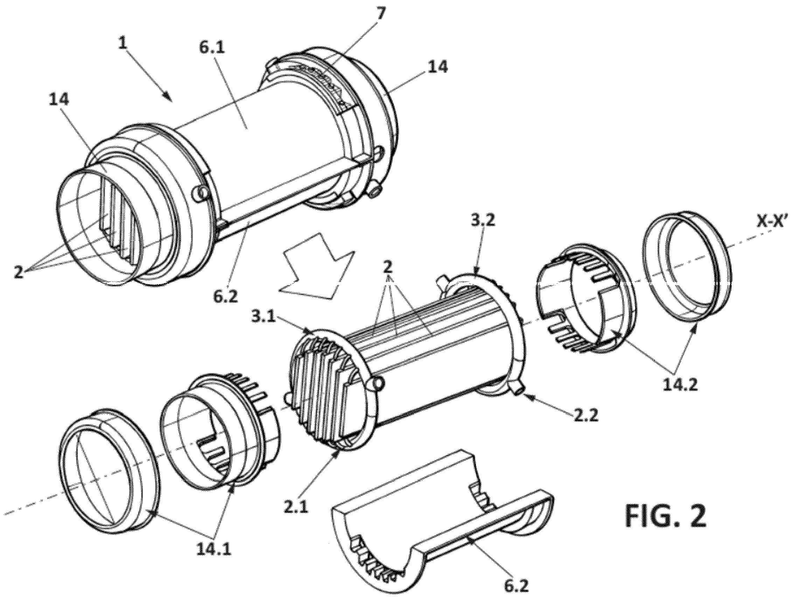

Also in the embodiment shown in Figure 1a, the plates (2) are arranged according to a stepped pattern wherein a central plate (2.3) is located between two contiguous plates (2.4, 2.5) located on each side of the central plate (2.3) and the area of the plates (2) decreases from the central plate (2.3) along a transversal direction *Y-Y'.* As shown in figure 2, the liner (6) has a substantially cylindrical shape extending along a length according to the longitudinal direction X-X', the liner (6) defines the inner chamber confining the plates (2), the first (3.1) and second (3.2) collectors and the first (5.1) and second (5.2) sub-collectors.

Figure 2 shows a view of the heat exchanger (1) and an exploded view where elements covering the plates (2), the collectors (3.1, 3.2) and sub-collectors (5.1, 5.2) are shown. In particular, the plates (2), the collectors (3.1, 3.2) and sub-collectors (5.1, 5.2) are covered by a liner (6) located along the length of the plates (2). In this embodiment, these elements are covered by two substantially semi-cylindrical portions (6.1, 6.2) and attaching means (7) configured for fixing both of the substantially semi-cylindrical portions (6.1, 6.2) of the liner (6) to one another.

On both ends, the first end (2.1) and the second (2,2) of the plates (2), the heat exchanger comprises connecting means (14) so that said heat exchanger (1) is adapted to be mounted, for example, at the outlet of a power unit. The connecting means (14) also comprises baffles which provide a support to the plates (2) and maintain said plates (2) in a disposition ensuring the adequate distance in between plates (2) so that the first fluid can flow enhancing the heat transfer between the first fluid to the second fluid.

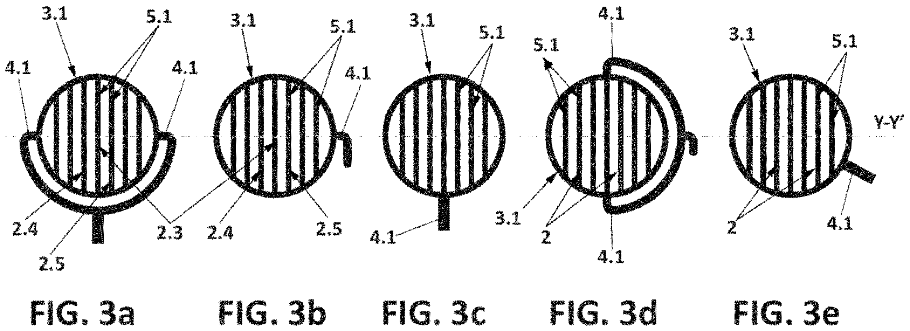

Figures 3a-3e depict embodiments of the distribution of the fluid outlets (4.1) of the first collector (3.1) and the distribution of the fluid inlets (4.2) of the second collector (3.2). In these figures, these embodiments of the collectors (3.1, 3.2) are represented independently of their location inside the heat exchanger of the invention, that is, each embodiments of figures 3a-3e are applicable on both ends (2.1, 2.2) of each of the plates (2). Thus, references such as (3.1) and (5.1) may be replaced by references (3.2) and (5.2).

Figure 3a to 3e show a distribution of parallel plates (2) and distributed essentially perpendicular with respect to a horizontal plane comprising both the longitudinal direction X-X' and the transversal direction *Y-Y'.* The plates (2) are arranged in a stepped pattern where the central plate (2.3) has the greater surface area with respect to the rest of the plates (2) and the surface area of the contiguous plates (2.4, 2.5) decreases from the central plate (2.3) and along a transversal direction *Y-Y'.* Thus, the plates (2) located farther from the central plate (2.3) have the lowest surface area with respect to the rest of plates (2).

In figure 3a, the first collector (3.1) has two fluid outlets (4.1), both located on opposite sides of the first collectors (3.1), symmetrically with respect to the center of the first collector (3.1), so that the introduction inside the collector and the extraction of fluid from the collector is performed in a homogeneous way. The two fluid outlets (4.1) are unified into one and only fluid outlet.

In the embodiment of figure 3b, the first collector (3.1) is open-ring shaped and the fluid outlet (4.1) is located on the opposite side with respect to the opened side of the first collector (3.1)

In the embodiment of figure 3c, the fluid outlet (4.1) of the first collector (3.1) is located on the lower side of the collector and is oriented in the same vertical direction as the at least one plate (2), that is perpendicular with respect to the transversal direction *Y-Y'.*

The embodiment of figure 3d shows an alternative of the embodiment depicted in figure 3a where the two fluid outlets (4.1) are located on the top side and the lower side of the collector, symmetrically with respect to the center of the collector (3.1).

In the embodiment of figure 3e, the fluid outlet (4.1) is located on a side of the first collector (3.1) and said outlet (4.1) has a straight shape.

In figures 3a, 3b and 3d, the fluid outlet(s) (4.1) of the first collector (3.1) are elbow-shaped. Respectively, in some embodiments, the fluid inlet(s) (4.2) of the second collector (3.2) are also elbow-shaped.

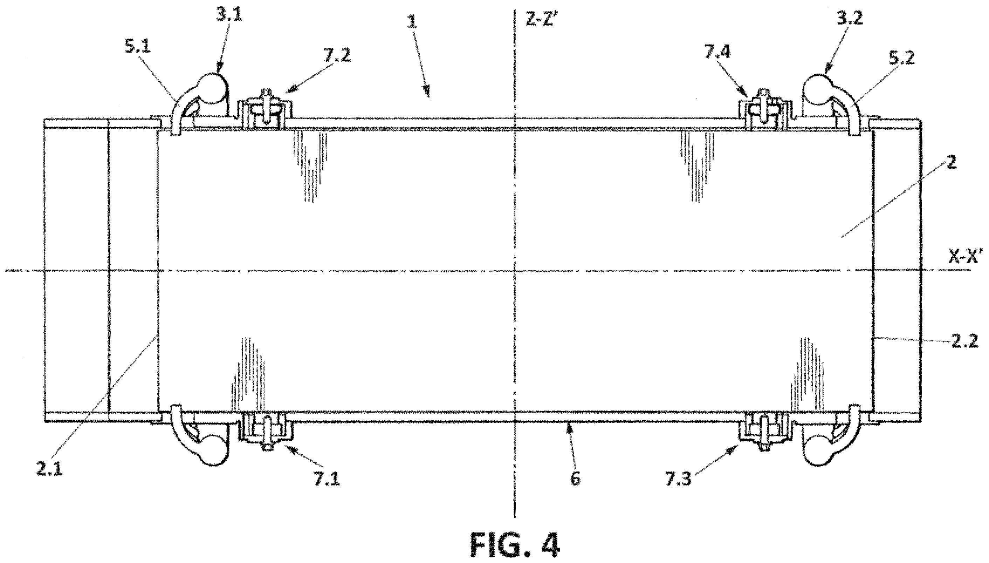

Figure 4 depicts the distribution of the attaching means (7.1, 7.2, 7.3, 7.4) of the heat exchanger (1) according to an embodiment of the invention.

In figure 4, the liner (6) is attached thanks to four attaching means (7.1, 7.2, 7.3, 7.4) located on the bottom left side, upper left side, bottom right side and upper right side of said liner (6) respectively. The liner (6) extends along the longitudinal direction X-X' and the plate (2) (only one plate (2) is shown in this cross-section view) is housed inside said liner (6). At the same time, the first and second collectors (3.1, 3.2) and the first and second sub-collectors (5.1, 5.2) are located outside the liner (6) and penetrates, thanks to the sub-collectors (5.1, 5.2) inside the liner (6) in order to connect with the respective ends (2.1, 2.2) of the plate (2).

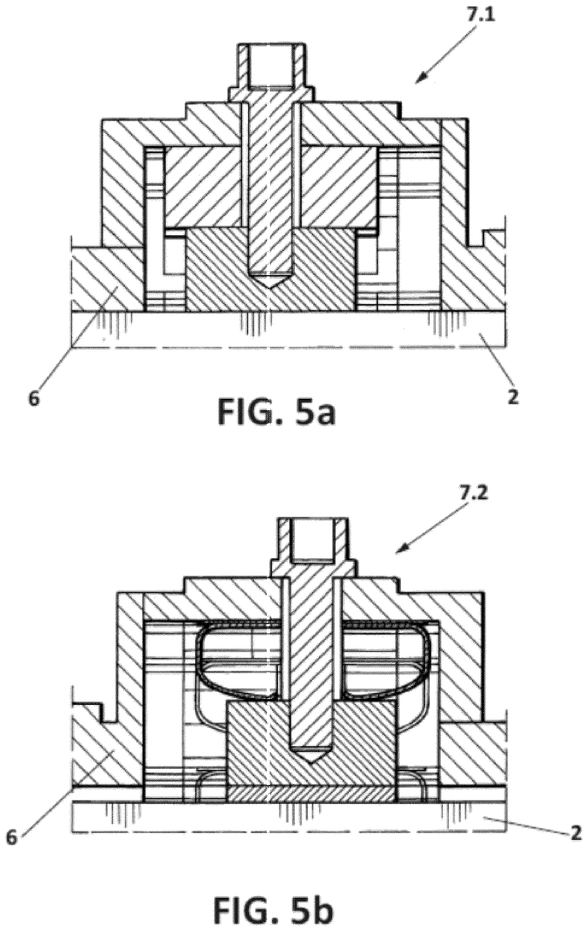

The first attaching means (7.1), located on the bottom left side of the liner (6), is fixed along the longitudinal direction X-X' and a vertical direction Z-Z' so that this particular attaching means (7.1) have no degrees of freedom on both of these direction at this specific point of the liner (6). Figure 5a shows one embodiment of said attaching means (7.1) where the attaching means, such as a bolt, is locked and have no degrees of freedom.

The second attaching means (7.2), located on the upper left side of the liner (6), is fixed along the longitudinal direction X-X' and free to move along the vertical direction Z-Z'. The freedom provided to the second attaching means (7.2) along the vertical direction Z-Z' is due to compression means such as springs allowing the liner (6) and the attaching means (7.2) to adapt to the thermal expansion of the plate (2) in this specific direction Z-Z'. Figure 5b shows one embodiment of the second attaching means (7.2) and compression means, such as springs, that allow such a degree of freedom along the vertical direction Z-Z'.

The term "free along" should be considered such that a limited degree of movement is allowed along a direction, or a plurality of directions, while such element is not completely free of movement but has room for providing a certain amount of movement along said direction(s) to the attaching means.

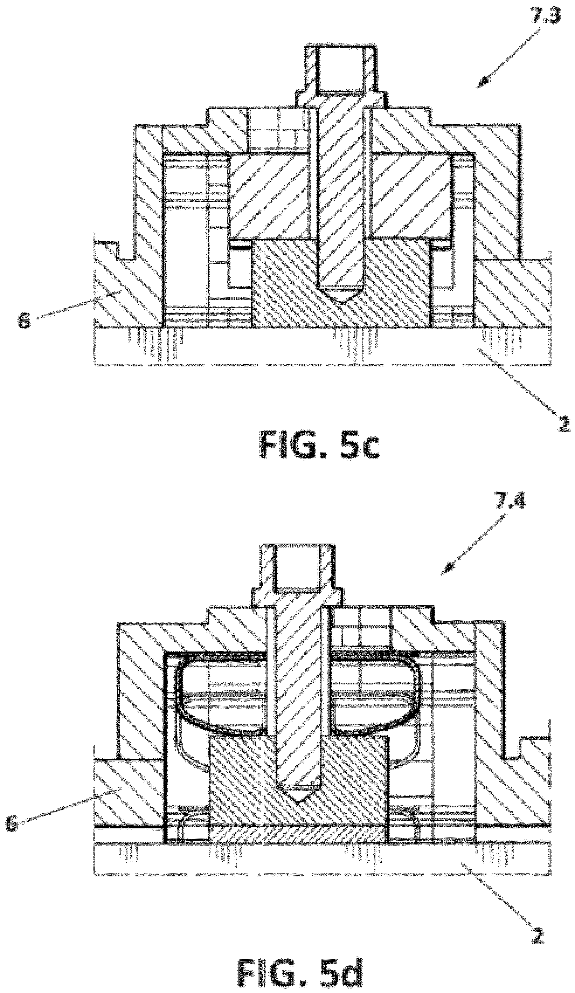

The third attaching means (7.3), located on the bottom right side of the liner (6) are free to move along the longitudinal direction X-X' and fixed along the vertical direction Z-Z'. The degree of freedom provided to the third attaching means (7.3) along the longitudinal direction X-X' is achieved by sliding means such as bolts mounted in a slotted hole, normally a rectangular hole with rounded ends, which allows a degree of displacement of said bolts along the longitudinal direction X-X' as depicted in figure 5c.

Finally, the fourth attaching means (7.4) located on the upper right side of the liner (6) are free to move along the longitudinal direction X-X' and the vertical direction Z-Z'. The fourth attaching means (7.4) comprise both compression means and sliding means which provide degrees of freedom to said fourth attaching means in both the longitudinal direction X-X' and the vertical direction Z-Z'. An embodiment of the fourth attaching means (7.4) is shown in figure 5d.

The combination of all of these attaching means (7.1, 7.2, 7.3, 7.4), as shown in the embodiment of figure 4, provides a solution to the thermal expansion of the plates (2) inside the liner (6).

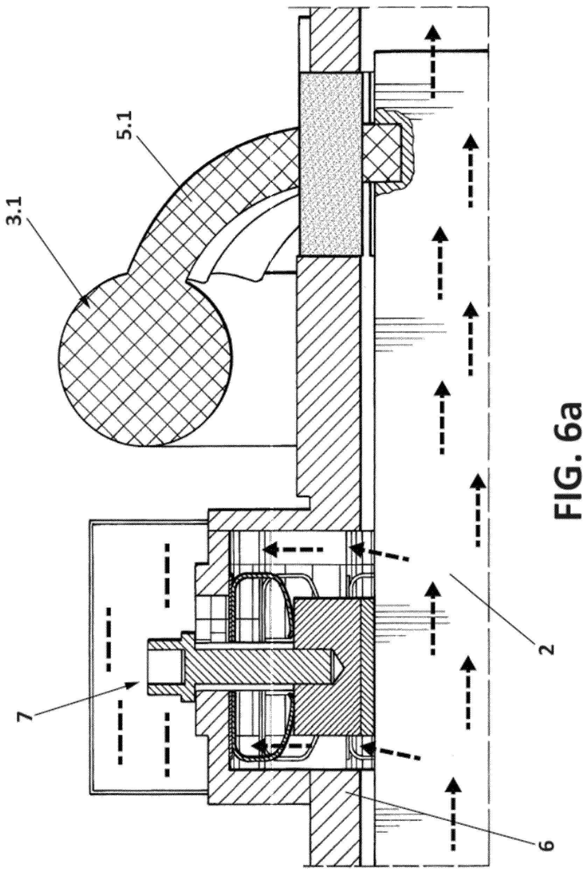

Figures 6a-6d depict embodiments of the integration of the collectors (3.1, 3.2) and sub-collectors (5.1, 5.2) with the liner (6). Each of these embodiments may apply to both of the collectors, the first collector (3.1) and the second collector (3.2).

In the embodiment of figure 6a, on one hand, the attaching means (7) are encapsulated, and, on the other hand, the first collector (3.1) and the first sub-collector (5.1) are sealed with respect to the inner chamber of the liner (6) where the first fluid flows coming out of a power unit outlet. That is, the volume defined by the encapsulation of the attaching means (7) is in fluidic communication with the inner chamber of the liner (6), said volume defined by the encapsulation being free to be filled up with first fluid.

Several arrows show how the first fluid circulates inside the inner chamber of the liner (6) and how enters inside the volume defined by the encapsulation of the attaching means (7).

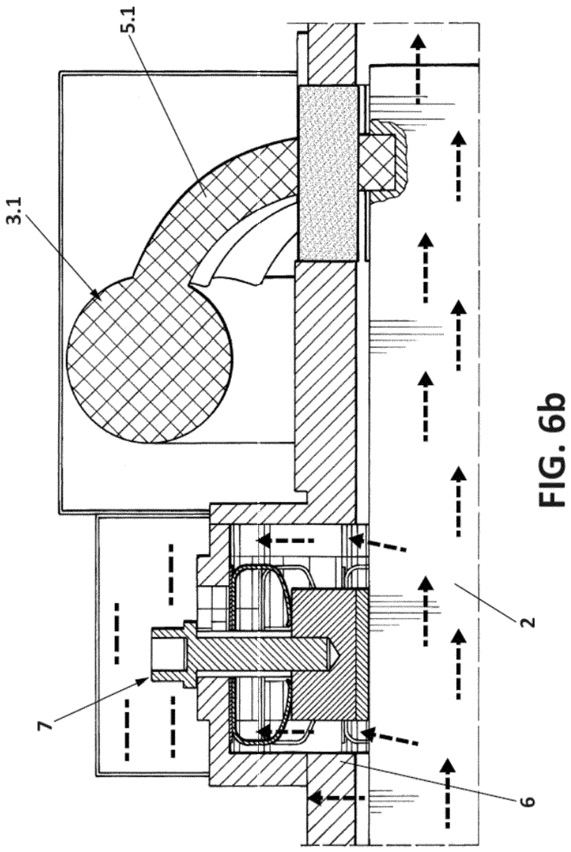

In the embodiment of figure 6b, the attaching means (7) are encapsulated and, the first collector (3.1) together with the first sub-collector (5.1) are also encapsulated. In this embodiment, the first collector (3.1) and the first sub-collector (5.1) are sealed with respect to the inner chamber of the liner (6) where the first fluid flows coming out of a power unit outlet. That is, the volume defined by the encapsulation of the attaching means (7) is in fluidic communication with the inner chamber of the liner (6), said volume being free to be filled up with first fluid. On the other side, the volume defined by the encapsulation of the first collector (3.1) and the first sub-collector (5.1) is sealed so that the first fluid is not able to penetrate said volume.

Several arrows show how the first fluid circulates inside the inner chamber of the liner (6) and how enters inside the volume defined by the encapsulation of the attaching means (7). However, it can also be seen that no first fluid penetrates inside the volume defined by the encapsulation of the first collector (3.1) and the first sub-collector (5.1).

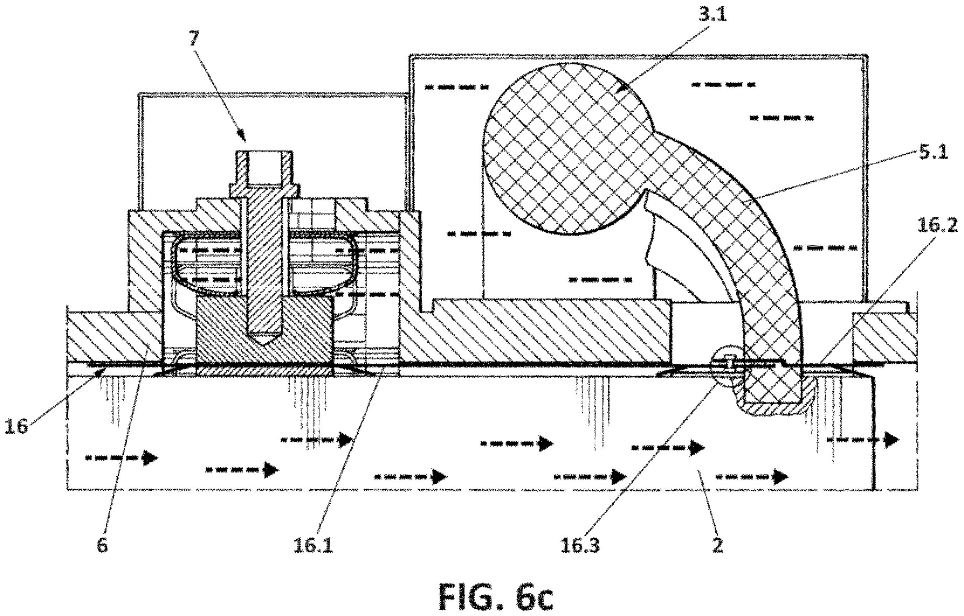

In the embodiment of figure 6c, the attaching means (7) are encapsulated, the collectors (3.1) and sub-collectors (5.1) are also encapsulated, and the liner (6) further comprises blocking means (16), such as layers providing a degree of permeability in between the encapsulation volumes and the inner chamber of the liner (6). The blocking means (16) are configured for opening or closing the fluidic communication with the inner chamber filled with first fluid, that is, the fluid coming out of the power unit outlet. The blocking means (16) are mounted along the liner (6) and in between the first sub-collectors (5.1) and the second sub-collectors (5.2). As shown in figure 6c, the blocking means (16) may comprise two portions (16.1, 16.2) attached to each other by means of coupling means (16.3), such as rivets, which allows disassembling the two portions (16.1, 16.2) of the blocking means. Preferably, the blocking means (16) are made of Inconel, Corrosion Resistant Stainless Steel or any material resistant to both corrosion and high temperatures. Advantageously, the blocking means (16) helps minimizing the aerodynamic flow leakage inside the liner (6).

In some embodiments, not shown in figure 6c, the blocking means (16) have two substantially semi-circular sections.

In this figure 6c some arrows depict how the first fluid circulates inside the inner chamber of the liner (6), while inside both encapsulations no flow of first fluid is shown when the blocking means (16) close the fluidic communication with the inner chamber of the liner (6).

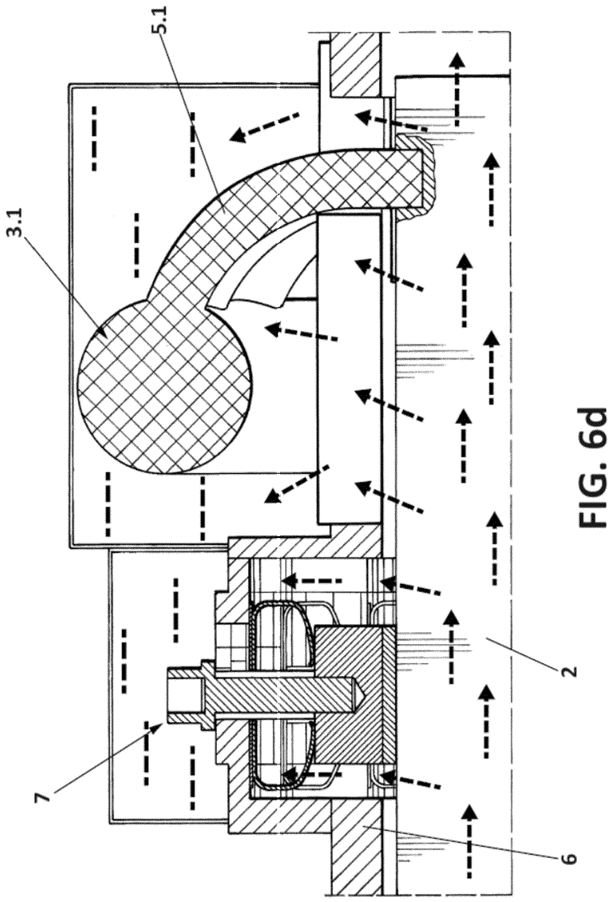

In the embodiment of figure 6d, the attaching means (7) are encapsulated, the collectors (3.1) and sub-collectors (5.1) are also encapsulated and both volumes defined by both encapsulations are in fluid communication with the power unit outlet, that is with the inner chamber of the liner (6) where the first fluid flows. This provides an homogeneous temperature among the plates, the first and second sub-collectors (5.1, 5.2) and the first and second collectors (3.1, 3.2) by allowing the first fluid, exhaust gases from the power unit outlet, to enter the collector area. Thus, collectors (3.1, 3.2) and sub-collectors (5.1, 5.2) are relieved from thermal stress present during power unit operation.

In figure 6d several arrows show how the first fluid circulates inside the inner chamber of the liner (6) and how it penetrates inside the volumes defined by both encapsulations.

### Power Unit

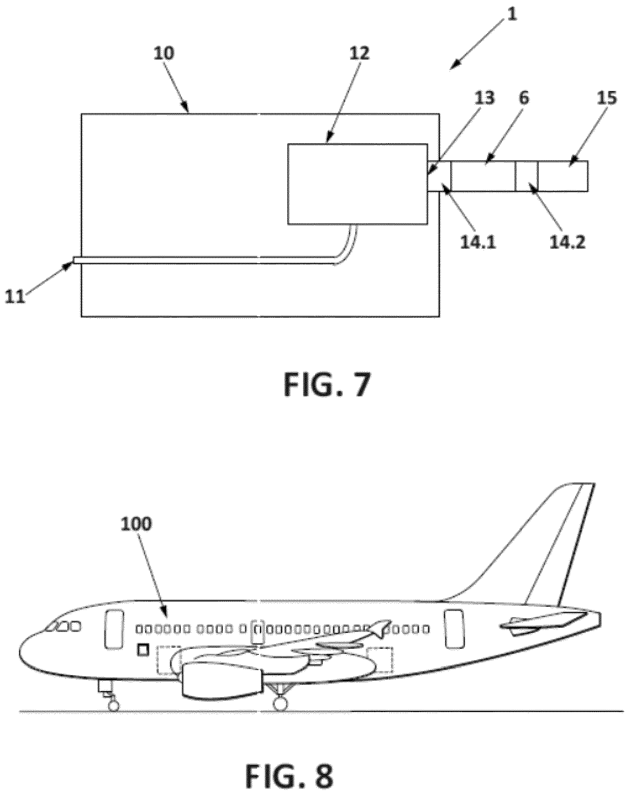

Figure 7 shows an embodiment of a power unit (10) for an aircraft having a power unit inlet (11) supplying fluid to the engine (12) of the power unit (10) and a power unit outlet (13). The heat exchanger (1) of any of the embodiments of the present invention is mounted downstream the power unit outlet (13) by means of a first connecting means (14.1) located at the first end of the at least one plate comprised in the heat exchanger (1). Then, a muffler (15) is mounted downstream the heat exchanger (1) by means of a second connecting means (14.2) located at the second end of the at least one plate comprised in the heat exchanger (1).

### Aircraft

Figure 8 shows an embodiment of an aircraft implementing any embodiment of a power unit (10) according to the second inventive aspect of the inventive which comprises any embodiment previously described, or any combined embodiments previously described, of the heat exchanger (1) of the invention.

### Preferred embodiments of the invention

In a preferred embodiment, the heat exchanger of the invention comprises seven plates (2), as shown in Figure 1, and these plates (2) has different widths which are located inside the liner (6), said liner being mounted at the power unit outlet. The plates (2) present a stepped pattern, which helps complying with the dimensional constraints provided by the liner shape and location of installation. By providing said design of plates (2), the invention permits recovering as much heat available from the exhaust gases by transferring said heat to the fluid located inside the plates (2).

Inside the plate (2), the fluid flows in the opposite direction with respect to the exhaust gases in order to provide a counterflow heat exchange and increase the efficiency of the whole heat exchanger by a constant increasing of temperature gradient along the plate.

The heat exchanger of the preferred embodiment has two collectors (3.1, 3.2), a first (3.1) and a second collector (3.2), the first collector (3.1) having one fluid outlet (4.1) and the second collector (3.2) having one fluid inlet (4.2). Each collector (3.1, 3.2) is in fluidic communication with the inner chamber of the plates (2) thanks to first sub-collectors (5.1), which connect the first collector (3.1) to each first end (2.1) of the plates (2), and thanks to second sub-collectors (5.2), which connect the second collector (3.2) to each second end (2.2) of the plates (2).

The exhaust gases of the power unit (10) flow among the plates (2) at high speed and, thanks to the shape of the plate, a pillow plate shape, the heat transfer to the fluid located inside the plate is increased.

The plates (2) comprise two sheets defining a watertight and gastight inner chamber, said sheets being coupled to each other by means of discrete spot welds joining respective portions of each sheet and, across their corresponding contours by means of a continuous weld.

The plates (2) has specific geometrical parameters, which provide relevant advantages to the heat exchanger of the invention.

In this preferred embodiment, the fluid flowing inside the plates is Nitrogen (N₂).

Each plate (2) is hydraulically inflated by using water through a hydrostatic pump. Hydraulic inflation process is a safe inflation process. However, other inflation processes can be used depending on the application. The inflation process pressurises the two sheets, which allows the material to deform in between the discrete spot welds, and results in the creation of cavities so that the fluid is able to flow inside the created inner chamber.

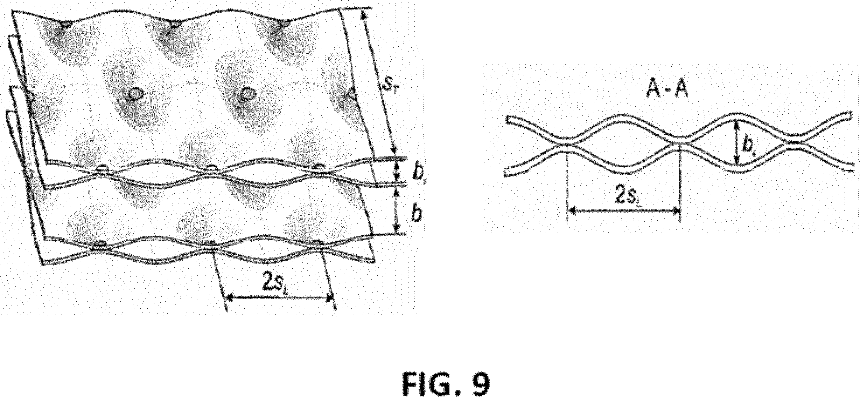

The inflation height (bᵢ) of the plate is the maximum inner expansion of the plate as shown in the figure 9. This particular parameter is responsible of the optimal point of heat transfer coefficient and intermediate fluid pressure drop inside the heat exchanger. In preferred embodiments, the inflation height is between 3 and 6 mm, preferably 3,5 mm.

The distance between plates (b), as shown in Figure 9, is a parameter which permit a control of the exhaust gases speed flowing inside the heat exchanger and, thus, also control the pressure drop which has a high impact on the performances of the power unit (10). In preferred embodiments, the optimal distance between plate is between 16 and 30 mm, more preferably between 19,5 and 23 mm, so that the exhaust gases speed is controlled and meet with the pressure drop criteria while not affecting the overall performance of the machine and avoiding higher consumption.

The longitudinal distance between two discrete weld spots (2S_{L}) and transverse distance between two discrete weld spots (S_{T}), as shown in figure 9, defines the patch of the fluid within the inner chamber of the plates. A correct sizing of the longitudinal distance between two spots and of the transverse distance between two spots helps reducing the pressure drop, increase the heat transfer coefficient and provides a homogeneous thermal repartition along the plates in order to avoid overstress and creep damages. In preferred embodiments, the ratio 2S_{L}/S_{T}, named coefficient a_{d}, is preferably equal to 1 and both the longitudinal distance and the transverse distance are preferably equal to 42 mm.

The control of the diameter of the welding sports (d_{SP}) provides stability to the plate as well as affects the path of the fluid located inside the plate. This parameter does impact the pressure drop, the heat transfer coefficient and overall stress inside the plates, thus, this parameter directly impact overall performance of the heat exchanger. Increasing the diameter of the discrete spots helps increasing the convective coefficient inside the plate, which increase overall heat transfer capacities. In preferred embodiments, the diameter of the welding sports is 7,14 mm.

The ratio d_{SP}/S_{T}, named coefficient b_{d}, is preferably equal to 0,17 and said parameter ensures that the compressor power, the heat transfer area and pressure drop are controlled and provide optimal performances to the heat exchanger of the present invention when in operative conditions.

The ratio bᵢ/S_{T}, named coefficient c_{d}, is preferably equal to 0,0849 and said parameter impacts the compressor power, the heat transfer area and the fluid and exhaust gas speed.

In the preferred embodiment, the first (3.1) and second (3.2) collectors are ring shapes in order to avoid eventual problems related to the thermal dilation and also offer an homogeneous distribution of fluid to the plates. Also, the sub-collectors (5.1, 5.2) are preferably curved in order to avoid potential stress to the dilatation.

In preferred embodiments, the plates (2) are made of Inconel 625 for providing thermal resistance and ensuring optimal conditions for heat transfer between the exhaust gases and the fluid located inside the plates, preferably Nitrogen.

Also in this preferred embodiment, the heat exchanger has a maximum length of 591 mm and a maximum diameter of 260 mm.

In another preferred embodiment, the fluid flowing inside the plates is Helium (He) and the following parameters are set regarding the plates of the heat exchanger of the invention:
- bᵢ, the inflation height of the plates, is equal to 5,26 mm in order to minimize the heat transfer area,
- b, the distance between plates, is between 19,5 and 23 mm,
- the longitudinal distance between two discrete weld spots (2S_{L}) and transverse distance between two discrete weld spots (S_{T}) are equal to 42 mm,
- the diameter of the welding sports (d_{SP}) is equal to 7,14 mm,
- parameter a_{d} is equal to 1
- parameter b_{d} is equal to 0,17
- parameter c_{d} is equal to 0,0849

In this preferred embodiment, when the fluid located inside the plate is Helium, the diameter of the muffler, located downstream the heat exchanger, has to be increased and a preferred diameter is 0,2849 m.

## Claims

1. A heat exchanger (1) for an aircraft, the heat exchanger (1) arranged along a longitudinal direction X-X' and comprising:
at least one plate (2) having a first end (2.1) and a second end (2.2) according to the longitudinal direction X-X', the at least one plate (2) comprising an inner hollow volume configured to house a second fluid for transferring heat from a first fluid located outside the at least one plate (2) to the second fluid located inside the at least one plate (2) in an operative mode of the heat exchanger (1),
a first collector (3.1) and a second collector (3.2) configured for respectively outputting the second fluid off the at least one plate (2) and inputting the second fluid in the at least one plate (2), wherein
the first collector (3.1) is located at the first end (2.1) of the at least one plate (2) and the second collector (3.2) is located at the second end (2.2) of the at least one plate (2),
the first collector (3.1) comprises at least one fluid outlet (4.1) and the second collector (3.2) comprises at least one fluid inlet (4.2), and
the first collector (3.1) and the second collector (3.2) are configured to be in fluidic communication with, the inner hollow volume of the at least one plate (2), the at least one fluid outlet (4.1) and the at least one fluid inlet (4.2),
at least one first sub-collector (5.1) configured for connecting the first collector (3.1) to the first end (2.1) of the at least one plate (2);
at least one second sub-collector (5.2) configured for connecting the second collector (3.2) to the second end (2.2) of the at least one plate (2),
a liner (6) extending along a length L_{T} according to the longitudinal direction X-X', the liner (6) being configured for defining an inner chamber confining the at least one plate (2), the first (3.1) and second (3.2) collectors and the first (5.1) and second (5.2) sub-collectors, and
wherein
the liner (6) has a substantially cylindrical shape extending along the length L_{T} according to the longitudinal direction X-X',
the first and second collectors (3.1, 3.2) are ring-shaped or open-ring shaped, preferably circular shaped, and
the at least one plate (2) comprises at least two sheets defining a watertight and gastight inner chamber, said sheets being coupled to each other by means of discrete spot welds joining respective portions of each sheet and, across their corresponding contours by means of a continuous weld.

2. The heat exchanger (1) according to the preceding claim, wherein the liner (6) comprises at least two portions (6.1, 6.2) and attaching means (7) configured for fixing the portions (6.1, 6.2) of the liner (6) together.

3. The heat exchanger (1) according to any of the preceding claims, wherein the first and second sub-collectors (5.1, 5.2) are curved.

4. The heat exchanger (1) according to any of the preceding claims, wherein the heat exchanger (1) comprises a plurality of plates (2), preferably between 7 and 9 plates.

5. The heat exchanger (1) according claim 4, wherein the plurality of plates (2) are arranged essentially parallel to each other according to the longitudinal direction X-X' and essentially perpendicular with respect to a horizontal plane comprising the transversal direction *Y-Y'.*

6. The heat exchanger (1) according to claim 5, wherein the plurality of plates (2) are arranged according to a stepped pattern wherein the area of the plurality of plates (2) decreases along a transversal direction *Y-Y'.*

7. The heat exchanger (1) according to any of the preceding claims, wherein the second fluid is Nitrogen, Helium, EGW (Ethylene Glycol Water), oil or water.

8. The heat exchanger (1) according to any of the preceding claims, wherein the at least one fluid outlet (4.1) of the first collector (3.1) and the at least one fluid inlet (4.2) of the second collector (3.2) are elbow-shaped.

9. The heat exchanger (1) according to any of the preceding claims, wherein the at least one fluid outlet (4.1) of the first collector (3.1) and the at least one fluid inlet (4.2) of the second collector (3.2) are oriented in the same vertical direction as the at least one plate (2).

10. The heat exchanger (1) according to any of the preceding claims, wherein
the first and second collectors (3.1, 3.2) respectively comprise two fluid outlets (4.1) and two fluid inlets (4.2),
the two fluid outlets (4.1) being in fluidic communication and connected to one another, and
the two fluid inlets (4.2) being in fluidic communication and connected to one another, and
the two fluid outlets (4.1) and the two fluid inlets (4.2) are respectively located on opposite sides of the first collector (3.1) and of the second collector (3.2).

11. The heat exchanger (1) according to any of claims 2 to 10, wherein the attaching means (7) are located on each side of the liner (6) and symmetrically placed along the length of the liner (6) with respect to the symmetrical axis of the liner (6).

12. The heat exchanger (1) according to any of the preceding claims, wherein the liner (6) is gastight and/or fireproof.

13. A power unit (10) for an aircraft comprising:
a power unit inlet (11) configured to supply the first fluid to the power unit (10),
an engine (12) and a power unit outlet (13) configured for exhausting the first fluid
out of the engine (12),
wherein
the power unit outlet (13) comprises a heat exchanger (1) according to any of the preceding claims, and
the heat exchanger (1) further comprises two connecting means (14.1, 14.2), one located at each end of the at least one plate (2), wherein one of the connecting means (14.1, 14.2) is configured for mounting the heat exchanger (1) on the power unit outlet (13).

14. The power unit (10) according to claim 13 and the heat exchanger (1) according to claim 2 to 12, wherein the attaching means (7) are either:
fixed along the longitudinal direction X-X' and a vertical direction Z-Z', or
fixed along the longitudinal direction X-X' and free along the vertical direction Z-Z', or
free along the longitudinal direction X-X' and fixed along the vertical direction Z-Z', or
free along the longitudinal direction X-X' direction and the vertical direction Z-Z'.

15. The power unit (10) according any of claims 13 or 14 and the heat exchanger according to claim 2 to 12, wherein the attaching means (7) and/or the collectors (3.1, 3.2) and sub-collectors (5.1, 5.2), are either:
sealed with respect to the power unit outlet (10), or
encapsulated and sealed with respect to the power unit outlet (10), or
encapsulated and further comprises blocking means (16) configured for opening or closing the fluidic communication with the power unit outlet (10), or
encapsulated and in fluid communication with the power unit outlet (10).

16. An aircraft (100) comprising a power unit (10) according to any of claims 13 to 15.

## Patentansprüche

1. Wärmetauscher (1) für ein Luftfahrzeug, wobei der Wärmetauscher (1) entlang einer Längsrichtung X-X' angeordnet ist und Folgendes umfasst:
mindestens eine Platte (2) mit einem ersten Ende (2.1) und einem zweiten Ende (2.2) gemäß der Längsrichtung X-X', wobei die mindestens eine Platte (2) ein inneres Hohlvolumen umfasst, das dazu ausgelegt ist, ein zweites Fluid aufzunehmen, um Wärme von einem ersten Fluid, das sich außerhalb der mindestens einen Platte (2) befindet, auf das zweite Fluid, das sich innerhalb der mindestens einen Platte (2) befindet, in einem Betriebsmodus des Wärmetauschers (1) zu übertragen,
einen ersten Sammler (3.1) und einen zweiten Sammler (3.2), die dazu ausgelegt sind, jeweils das zweite Fluid aus der mindestens einen Platte (2) auszuleiten und das zweite Fluid in die mindestens eine Platte (2) einzuleiten, wobei
der erste Sammler (3.1) am ersten Ende (2.1) der mindestens einen Platte (2) angeordnet ist und der zweite Sammler (3.2) am zweiten Ende (2.2) der mindestens einen Platte (2) angeordnet ist,
der erste Sammler (3.1) mindestens einen Fluidauslass (4.1) umfasst und der zweite Sammler (3.2) mindestens einen Fluideinlass (4.2) umfasst, und
der erste Sammler (3.1) und der zweite Sammler (3.2) dazu ausgelegt sind, in Fluidverbindung mit dem inneren Hohlvolumen der mindestens einen Platte (2), dem mindestens einen Fluidauslass (4.1) und dem mindestens einen Fluideinlass (4.2) zu stehen,
mindestens einen ersten Untersammler (5.1), der dazu ausgelegt ist, den ersten Sammler (3.1) mit dem ersten Ende (2.1) der mindestens einen Platte (2) zu verbinden;
mindestens einen zweiten Untersammler (5.2), der dazu ausgelegt ist, den zweiten Sammler (3.2) mit dem zweiten Ende (2.2) der mindestens einen Platte (2) zu verbinden,
eine Auskleidung (6), die sich entlang einer Länge L_{T} gemäß der Längsrichtung X-X' erstreckt, wobei die Auskleidung (6) dazu ausgelegt ist, eine Innenkammer zu definieren, die die mindestens eine Platte (2), den ersten (3.1) und zweiten (3.2) Sammler sowie den ersten (5.1) und zweiten (5.2) Untersammler umschließt, und
wobei
die Auskleidung (6) eine im Wesentlichen zylindrische Form aufweist, die sich entlang der Länge L_{T} gemäß der Längsrichtung X-X' erstreckt,
der erste und der zweite Sammler (3.1, 3.2) ringförmig oder offenringförmig, vorzugsweise kreisförmig, ausgebildet sind, und
die mindestens eine Platte (2) mindestens zwei Bleche umfasst, die eine wasserdichte und gasdichte Innenkammer definieren, wobei die Bleche miteinander mittels diskreter Punktschweißungen, die jeweilige Abschnitte jedes Blechs miteinander verbinden, und entlang ihrer entsprechenden Konturen mittels einer durchgehenden Schweißnaht verbunden sind.

2. Wärmetauscher (1) nach dem vorhergehenden Anspruch, wobei die Auskleidung (6) mindestens zwei Abschnitte (6.1, 6.2) und Befestigungsmittel (7) umfasst, die dazu ausgelegt sind, die Abschnitte (6.1, 6.2) der Auskleidung (6) miteinander zu befestigen.

3. Wärmetauscher (1) nach einem der vorhergehenden Ansprüche, wobei der erste und der zweite Untersammler (5.1, 5.2) gekrümmt sind.

4. Wärmetauscher (1) nach einem der vorhergehenden Ansprüche, wobei der Wärmetauscher (1) eine Mehrzahl von Platten (2), vorzugsweise zwischen 7 und 9 Platten, aufweist.

5. Wärmetauscher (1) nach Anspruch 4, wobei die Mehrzahl von Platten (2) im Wesentlichen parallel zueinander gemäß der Längsrichtung X-X' und im Wesentlichen senkrecht zu einer horizontalen Ebene angeordnet sind, die die Querrichtung Y-Y' umfasst.

6. Wärmetauscher (1) nach Anspruch 5, wobei die Mehrzahl von Platten (2) gemäß einem abgestuften Muster angeordnet sind, wobei die Fläche der Mehrzahl von Platten (2) entlang einer Querrichtung Y-Y' abnimmt.

7. Wärmetauscher (1) nach einem der vorhergehenden Ansprüche, wobei das zweite Fluid Stickstoff, Helium, EGW (Ethylenglykol-Wasser), Öl oder Wasser ist.

8. Wärmetauscher (1) nach einem der vorhergehenden Ansprüche, wobei der mindestens eine Fluidauslass (4.1) des ersten Sammlers (3.1) und der mindestens eine Fluideinlass (4.2) des zweiten Sammlers (3.2) winkelförmig ausgebildet sind.

9. Wärmetauscher (1) nach einem der vorhergehenden Ansprüche, wobei der mindestens eine Fluidauslass (4.1) des ersten Sammlers (3.1) und der mindestens eine Fluideinlass (4.2) des zweiten Sammlers (3.2) in derselben vertikalen Richtung wie die mindestens eine Platte (2) ausgerichtet sind.

10. Wärmetauscher (1) nach einem der vorhergehenden Ansprüche, wobei
der erste und der zweite Sammler (3.1, 3.2) jeweils zwei Fluidauslässe (4.1) und zwei Fluideinlässe (4.2) umfassen, die zwei Fluidauslässe (4.1) in Fluidverbindung stehen und miteinander verbunden sind, und
die zwei Fluideinlässe (4.2) in Fluidverbindung stehen und miteinander verbunden sind, und
die zwei Fluidauslässe (4.1) und die zwei Fluideinlässe (4.2) jeweils auf gegenüberliegenden Seiten des ersten Sammlers (3.1) bzw. des zweiten Sammlers (3.2) angeordnet sind.

11. Wärmetauscher (1) nach einem der Ansprüche 2 bis 10, wobei die Befestigungsmittel (7) auf jeder Seite der Auskleidung (6) angeordnet und symmetrisch entlang der Länge der Auskleidung (6) in Bezug auf die symmetrische Achse der Auskleidung (6) angeordnet sind.

12. Wärmetauscher (1) nach einem der vorhergehenden Ansprüche, wobei die Auskleidung (6) gasdicht und/oder feuerfest ist.

13. Leistungseinheit (10) für ein Luftfahrzeug, umfassend:
einen Leistungseinheitseinlass (11), der dazu ausgelegt ist, das erste Fluid der Leistungseinheit (10) zuzuführen, einen Motor (12) und einen Leistungseinheitsauslass (13), der dazu ausgelegt ist, das erste Fluid aus dem Motor (12) auszuleiten,
wobei
der Leistungseinheitsauslass (13) einen Wärmetauscher (1) nach einem der vorhergehenden Ansprüche umfasst, und
der Wärmetauscher (1) ferner zwei Verbindungsmittel (14.1, 14.2) umfasst, von denen eines an jedem Ende der mindestens einen Platte (2) angeordnet ist, wobei eines der Verbindungsmittel (14.1, 14.2) dazu ausgelegt ist, den Wärmetauscher (1) am Leistungseinheitsauslass (13) zu montieren.

14. Leistungseinheit (10) nach Anspruch 13 und Wärmetauscher (1) nach einem der Ansprüche 2 bis 12, wobei die Befestigungsmittel (7) entweder:
entlang der Längsrichtung X-X' und einer vertikalen Richtung Z-Z' festgelegt sind, oder
entlang der Längsrichtung X-X' festgelegt und entlang der vertikalen Richtung Z-Z' frei sind, oder
entlang der Längsrichtung X-X' frei und entlang der vertikalen Richtung Z-Z' festgelegt sind, oder
entlang der Längsrichtung X-X' und der vertikalen Richtung Z-Z' frei sind.

15. Leistungseinheit (10) nach einem der Ansprüche 13 oder 14 und Wärmetauscher nach einem der Ansprüche 2 bis 12, wobei die Befestigungsmittel (7) und/oder die Sammler (3.1, 3.2) und Untersammler (5.1, 5.2) entweder:
gegenüber dem Leistungseinheitsauslass (10) abgedichtet sind, oder
gekapselt und gegenüber dem Leistungseinheitsauslass (10) abgedichtet sind, oder
gekapselt sind und ferner Sperrmittel (16) umfassen, die dazu ausgelegt sind, die Fluidverbindung mit dem Leistungseinheitsauslass (10) zu öffnen oder zu schließen, oder
gekapselt sind und in Fluidverbindung mit dem Leistungseinheitsauslass (10) stehen.

16. Luftfahrzeug (100), umfassend eine Leistungseinheit (10) nach einem der Ansprüche 13 bis 15.

## Revendications

1. Échangeur de chaleur (1) pour un aéronef, l'échangeur de chaleur (1) étant agencé le long d'une direction longitudinale X-X' et comprenant :
au moins une plaque (2) ayant une première extrémité (2.1) et une seconde extrémité (2.2) selon la direction longitudinale X-X', l'au moins une plaque (2) comprenant un volume creux interne configuré pour loger un second fluide pour transférer la chaleur d'un premier fluide situé à l'extérieur de l'au moins une plaque (2) au second fluide situé à l'intérieur de l'au moins une plaque (2) dans un mode de fonctionnement de l'échangeur de chaleur (1),
un premier collecteur (3.1) et un second collecteur (3.2) configurés pour respectivement faire sortir le second fluide de l'au moins une plaque (2) et faire entrer le second fluide dans l'au moins une plaque (2),
le premier collecteur (3.1) étant situé à la première extrémité (2.1) de l'au moins une plaque (2) et le second collecteur (3.2) étant situé à la seconde extrémité (2.2) de l'au moins une plaque (2),
le premier collecteur (3.1) comprenant au moins une sortie de fluide (4.1) et le second collecteur (3.2) comprenant au moins une entrée de fluide (4.2), et
le premier collecteur (3.1) et le second collecteur (3.2) étant configurés pour être en communication fluidique avec le volume creux interne de l'au moins une plaque (2), l'au moins une sortie de fluide (4.1) et l'au moins une entrée de fluide (4.2),
au moins un premier sous-collecteur (5.1) configuré pour relier le premier collecteur (3.1) à la première extrémité (2.1) de l'au moins une plaque (2) ;
au moins un second sous-collecteur (5.2) configuré pour relier le second collecteur (3.2) à la seconde extrémité (2.2) de l'au moins une plaque (2),
un revêtement (6) s'étendant sur une longueur L_{T} selon la direction longitudinale X-X', le revêtement (6) étant configuré pour définir une chambre interne confinant l'au moins une plaque (2), les premier (3.1) et second (3.2) collecteurs et les premier (5.1) et second (5.2) sous-collecteurs, et
dans lequel
le revêtement (6) a une forme essentiellement cylindrique s'étendant sur la longueur L_{T} selon la direction longitudinale X-X',
les premier et second collecteurs (3.1, 3.2) sont en forme d'anneaux ou d'anneaux ouverts, de préférence de forme circulaire, et
l'au moins une plaque (2) comprend au moins deux feuilles définissant une chambre intérieure étanche à l'eau et au gaz, lesdites feuilles étant couplées l'une à l'autre au moyen de soudures par points discrètes reliant des parties respectives de chaque feuille et, sur leurs contours correspondants, au moyen d'une soudure continue.

2. Échangeur de chaleur (1) selon la revendication précédente, dans lequel le revêtement (6) comprend au moins deux parties (6.1, 6.2) et des moyens de fixation (7) configurés pour fixer ensemble les parties (6.1, 6.2) du revêtement (6).

3. Échangeur de chaleur (1) selon l'une quelconque des revendications précédentes, dans lequel les premier et second sous-collecteurs (5.1, 5.2) sont incurvés.

4. Échangeur de chaleur (1) selon l'une quelconque des revendications précédentes, dans lequel l'échangeur de chaleur (1) comprend une pluralité de plaques (2), de préférence entre 7 et 9 plaques.

5. Échangeur de chaleur (1) selon la revendication 4, dans lequel la pluralité de plaques (2) sont agencées essentiellement parallèlement les unes aux autres selon la direction longitudinale *X-X'* et essentiellement perpendiculairement par rapport à un plan horizontal comprenant la direction transversale *Y-Y'.*

6. Échangeur de chaleur (1) selon la revendication 5, dans lequel la pluralité de plaques (2) sont agencées selon un motif en gradins dans lequel la superficie de la pluralité de plaques (2) diminue le long d'une direction transversale *Y-Y'.*

7. Échangeur de chaleur (1) selon l'une quelconque des revendications précédentes, dans lequel le second fluide est de l'azote, de l'hélium, de l'EGW (éthylène glycol eau), de l'huile ou de l'eau.

8. Échangeur de chaleur (1) selon l'une quelconque des revendications précédentes, dans lequel l'au moins une sortie de fluide (4.1) du premier collecteur (3.1) et l'au moins une entrée de fluide (4.2) du second collecteur (3.2) sont de forme arquée.

9. Échangeur de chaleur (1) selon l'une quelconque des revendications précédentes, dans lequel l'au moins une sortie de fluide (4.1) du premier collecteur (3.1) et l'au moins une entrée de fluide (4.2) du second collecteur (3.2) sont orientées dans la même direction verticale que l'au moins une plaque (2).

10. Échangeur de chaleur (1) selon l'une quelconque des revendications précédentes, dans lequel
les premier et second collecteurs (3.1, 3.2) comportent respectivement deux sorties de fluide (4.1) et deux entrées de fluide (4.2),
les deux sorties de fluide (4.1) étant en communication fluidique et reliées l'une à l'autre, et
les deux entrées de fluide (4.2) étant en communication fluidique et reliées l'une à l'autre, et
les deux sorties de fluide (4.1) et les deux entrées de fluide (4.2) étant situées respectivement sur des côtés opposés du premier collecteur (3.1) et du second collecteur (3.2).

11. Échangeur de chaleur (1) selon l'une quelconque des revendications 2 à 10, dans lequel les moyens de fixation (7) sont situés de chaque côté du revêtement (6) et placés symétriquement le long de la longueur du revêtement (6) par rapport à l'axe symétrique du revêtement (6).

12. Échangeur de chaleur (1) selon l'une quelconque des revendications précédentes, dans lequel le revêtement (6) est étanche aux gaz et/ou ignifuge.

13. Groupe motopropulseur (10) pour un aéronef, comprenant :
une entrée (11) du groupe motopropulseur configurée pour amener le premier fluide au groupe motopropulseur (10), un moteur (12) et une sortie (13) du groupe motopropulseur configurée pour évacuer le premier fluide hors du moteur (12),
dans lequel
la sortie (13) comprend un échangeur de chaleur (1) selon l'une quelconque des revendications précédentes, et
l'échangeur de chaleur (1) comprend en outre deux moyens de liaison (14.1, 14.2), un situé à chaque extrémité de l'au moins une plaque (2), l'un des moyens de liaison (14.1, 14.2) étant configuré pour monter l'échangeur de chaleur (1) sur la sortie (13) du groupe motopropulseur.

14. Groupe motopropulseur (10) selon la revendication 13 et échangeur de chaleur (1) selon les revendications 2 à 12, dans lesquels les moyens de fixation (7) sont soit :
fixes le long de la direction longitudinale X-X' et d'une direction verticale Z-Z', soit
fixes le long de la direction longitudinale X-X' et libres le long de la direction verticale Z-Z', soit
libres le long de la direction longitudinale X-X' et fixes le long de la direction verticale Z-Z', soit
libres le long de la direction longitudinale X-X' et de la direction verticale Z-Z'.

15. Groupe motopropulseur (10) selon l'une quelconque des revendications 13 ou 14 et échangeur de chaleur selon les revendications 2 à 12, dans lesquels les moyens de fixation (7) et/ou les collecteurs (3.1, 3.2) et les sous-collecteurs (5.1, 5.2) sont soit :
étanchéifiés par rapport à la sortie du groupe motopropulseur (10), soit
encapsulés et étanchéifiés par rapport à la sortie du groupe motopropulseur (10), soit
encapsulés et comprennent en outre des moyens d'obturation (16) configurés pour ouvrir ou fermer la communication fluidique avec la sortie du groupe motopropulseur (10), soit encapsulés et en communication fluidique avec la sortie du groupe motopropulseur (10).

16. Aéronef (100), comprenant un groupe motopropulseur (10) selon l'une quelconque des revendications 13 à 15.
